# EUROPÄISCHE PATENTANMELDUNG

(11) **EP 2 194 340 A2**
(43) Veröffentlichungstag der Anmeldung: **09.06.2010**
(21) Anmeldenummer: 09177945.4
(22) Anmeldetag: 03.12.2009
(51) Int. Cl.: F24J 2/52, E04D 3/36, E04D 5/14, E04D 12/00, E04D 13/16

(54) **Dachkonstruktion für einen Neubau**

(30) Priorität: 05.12.2008 DE 102008044380
(71) Anmelder: Climasol-Solaranlagen GmbH, 89073 Ulm (DE)
(72) Erfinder: Lutz, Stefan, 89075 Ulm (DE)
(74) Vertreter: Lermer, Christoph

(57) **Zusammenfassung**

Eine erfindungsgemäße Dachkonstruktion 1 weist einen tragenden Unterboden 10 auf, beispielsweise ein Trapezdach. Oberhalb anschließend an den Unterboden 10 ist eine erste (thermische) Isolationsschicht 21 (Dämmschicht), beispielsweise bestehend aus Glaswolleelementen, angeordnet. Auf der Isolationsschicht 21 liegt eine wasserdichte Dachfolie 50 auf, die die darunter liegenden Komponenten vor dem Eindringen von Feuchtigkeit und Wasser schützt. Unterhalb der Dachfolie ist ein Trägerelement 30 angeordnet, das mit einer Auflage 31, einer Halterung 33 und einem Verbindungsstück 32 besteht. Am Trägerelement können beispielsweise Solarmodule befestigt werden.

## Beschreibung

### GEBIET DER ERFINDUNG

Die vorliegende Erfindung betrifft eine Dachkonstruktion, insbesondere eine Flachdachkonstruktion, umfassend: einen Unterboden; wenigstens eine erste Isolationsschicht, die oberhalb des Unterbodens angeordnet ist; und wenigstens eine Dachabdeckung, die oberhalb der ersten Isolationsschicht angeordnet ist, zum wasserdichten Abdichten der darunter angeordneten Elemente.

### STAND DER TECHNIK

Der Einsatz von Solarmodulen zur Stromerzeugung hat im Angesicht steigender Energiepreise und knapper werdender nicht erneuerbarer Ressourcen an Bedeutung gewonnen. Um Solarmodule wirtschaftlich rentabel zu betreiben, wurden erhebliche Anstrengungen unternommen, die Rentabilität der Herstellung und den Wirkungsgrad der Module zu verbessern.

Für einen wirtschaftlichen Einsatz ist es jedoch erforderlich, dass die Solarmodule mit möglichst geringem technischem Aufwand an geeigneten Stellen aufgebaut und dort effektiv genutzt werden können. Bekanntermaßen werden Solarmodule häufig an Dächern angebracht, da dort die Sonneneinstrahlung ungehindert auf die Solarzelle auftreffen kann.

Insbesondere bei Anbringen von Solarmodulen auf Flachdächern führt dies jedoch zu Problemen, da Flachdächer meist durch besondere Maßnahmen, wie zum Beispiel dem Anbringen von wasserdichten Dachfolien, vor dem Eindringen von Feuchtigkeit geschützt sind. Beim Befestigen der Solarmodule kann der Feuchtigkeitsschutz leicht zerstört und das unerwünschte Eindringen von Wasser in die Dachstruktur gefördert werden.

Da dies nicht akzeptabel ist, werden bei Aufbau der Solarmodule Abdichtungsmaßnahmen getroffen, die jedoch hohen Aufwand bei der Montage verursachen und das Risiko von Leckagen mit sich bringen.

### AUFGABE DER ERFINDUNG

Ausgehend davon ist es die Aufgabe der vorliegenden Erfindung, eine Möglichkeit zu finden, bei der die Montage vereinfacht und das Risiko von Leckagen verringert wird.

### TECHNISCHE LÖSUNG

Diese Aufgabe wird gelöst durch Bereitstellung einer Dachkonstruktion nach Anspruch 1. Bevorzugte Ausführungsformen der Erfindung ergeben sich aus den Merkmalen der abhängigen Ansprüche.

Eine erfindungsgemäße Dachkonstruktion, insbesondere Flachdachkonstruktion, umfasst: einen Unterboden; wenigstens eine erste (thermische) Isolationsschicht (Dämmschicht), die oberhalb des Unterbodens angeordnet ist; und wenigstens eine Dachabdeckung, die oberhalb der ersten Isolationsschicht angeordnet ist, zum wasserdichten Abdichten der darunter angeordneten Elemente. Die Dachkonstruktion weist ein Trägerprofil mit einer Auflage und einem Halteabschnitt auf, wobei das Trägerprofil am Unterboden befestigt ist, und der Halteabschnitt unterhalb der Dachabdeckung angeordnet ist.

Die üblichen Probleme beim Anbringen von Solarmodulen an Flachdächern werden erfindungsgemäß dadurch gelöst, dass eine Flachdachkonstruktion bereitgestellt wird, bei der Trägerelemente bereits beim Neubau integriert werden. Diese Trägerelemente befinden sich unterhalb der Dachfolie und sind somit, wie der gesamte Unterbau, vor dem Eindringen von Wasser geschützt. Es ist nicht notwendig, bei der Montage von Solarmodulen in die wasserführende Dachfolie Öffnungen einzubringen, um Halterungen am Unterboden befestigen zu können.

Die Halterungen ragen etwas von der Ebene Isolationsschicht, auf der (direkt oder indirekt) die Dachfolie aufliegt, hervor, so dass ihre Lage von außen erkennbar und ein Anbringen bzw. Ankoppeln von Verbindungselementen möglich ist.

Statt einer können auch mehrere Isolations- bzw. Dämmschichten unterhalb des Trägers angeordnet sein.

Die Auflage ist vorzugsweise unterhalb der Dachabdeckung und oberhalb der ersten Isolationsschicht angeordnet, insbesondere zwischen der oberen Seite der Isolationsschicht und der Unterseite der Dachfolie.

Die Dachkonstruktion kann eine zweite Isolationsschicht umfassen, die oberhalb der ersten Isolationsschicht und unterhalb der Dachabdeckung angeordnet ist, insbesondere zwischen der oberen Seite der ersten Isolationsschicht und der Unterseite der Dachfolie.

Die Auflage ist vorzugsweise unterhalb der Dachabdeckung und zwischen der ersten Isolationsschicht und der zweiten Isolationsschicht angeordnet.

Die Auflage und der Halteabschnitt des Trägerprofils sind insbesondere über ein Verbindungsstück miteinander verbunden.

Der Halteabschnitt des Trägerprofils ist insbesondere oberhalb der Auflage des Trägerprofils angeordnet, und der Halteabschnitt hebt einen Bereich der Dachabdeckung gegenüber der bzw. relativ zur Oberseite der ersten Isolationsschicht bzw. der zweiten Isolationsschicht an.

Das Trägerprofil kann zur formschlüssigen Verbindung eines Verbindungselements mit der Halterung ausgebildet sein. Dies trägt dazu bei, dass ohne Öffnen der Dachfolie ein Anbringen von Kopplungselementen, Solarzellen, Gerüsten, etc. ermöglicht wird.

De Dachkonstruktion umfasst insbesondere ein Verbindungselement, das formschlüssig mit der Halterung des Trägerprofils ausgebildet ist, und das die Dachabdeckung zwischen der Halterung und dem Verbindungselement hält. Das Verbindungselement weist somit einen zur Halterung komplementär ausgebildeten Verbindungsabschnitt auf, so dass ein Formschluss erfolgen kann.

Das Verbindungselement kann beispielsweise eine Klammer zur Herstellung einer formschlüssigen Verbindung mit der Halterung des Trägerprofils aufweisen.

Das Verbindungselement kann einen Gleitschuh zur Aufnahme einer Modulschiene aufweisen, wobei die Modulschiene bewegbar im Gleitschuh angeordnet ist. So können thermische Schwankungen ausgeglichen werden. Eine Beschädigung von Solarmodulen, die an der Modulschiene befestigt sind, wird verhindert.

Die Auflage des Trägerelements kann mittels Verbindungselementen mit der Unterkonstruktion verbunden sein. Als Verbindungselemente dienen beispielsweise Verbindungsschrauben, die zugfest im Unterboden befestigt werden können.

Die Auflage des Trägerelements ist vorzugsweise thermisch entkoppelt bzw. thermisch schwach gekoppelt mit der Unterkonstruktion verbunden. Da lediglich die Verbindungselemente eine Verbindung des Trägerelements mit der Unterkonstruktion herstellen, können geeignete Maßnahmen getroffen werden, um Wärmebrücken zu verhindern, z.B. durch Ausbildung (wenigstens eines Abschnitts der) Verbindungselemente durch thermisch schlecht leitendes Material. In jedem Fall ist das Trägerelement räumlich vom Unterboden deutlich getrennt, wobei Dämmmaterial zwischen den Bauteilen liegt.

Die Auflage des Trägerelements kann eine Auflagefläche zur Auflage auf der ersten Isolationsschicht und zur flächigen Verteilung der Kräfte über den Auflagebereich der ersten Isolationsschicht aufweisen.

Insbesondere kann das Trägerelement im Überlappungsbereich zweier benachbart angeordneter Dachabdeckungen angeordnet sein. Durch Anbringen eines Verbindungselements auf der Halterung kann ein Abheben der Folienendabschnitte verhindert werden. Die Anzahl von Tellerhaltern, die üblicherweise zur Kompensation abhebender Kräfte im Neubau verwendet werden, kann damit reduziert werden. Es können jedoch im Rahmen der Erfindung die Trägerelemente prinzipiell beliebig relativ zu den Folienabschnitten positioniert und eingesetzt werden.

### KURZE BESCHREIBUNG DER FIGUREN

Weitere Merkmale und Vorteile der Erfindung werden aus der nachfolgenden Beschreibung bevorzugter Ausführungsbeispiele an Hand der Figuren deutlich. Es zeigen:
- Figur 1: ein erstes Ausführungsbeispiel einer erfindungsgemäßen Dachkonstruktion in einer Schnittansicht;
- Figur 2: ein zweites Ausführungsbeispiel einer erfindungsgemäßen Dachkonstruktion in einer Schnittansicht;
- Figur 3a, 3b: ein erfindungsgemäßes Trägerelement mit Verbindungselement in einem Querschnitt bzw. in einem Längsschnitt;
- Figur 5: ein drittes Ausführungsbeispiel einer erfindungsgemäßen Dachkonstruktion in einer Schnittansicht; und
- Figur 6: eine Ausführungsform eines Solarmoduls gemäß der Erfindung.

### BESCHREIBUNG BEVORZUGTER AUSFÜHRUNGSBEISPIELE

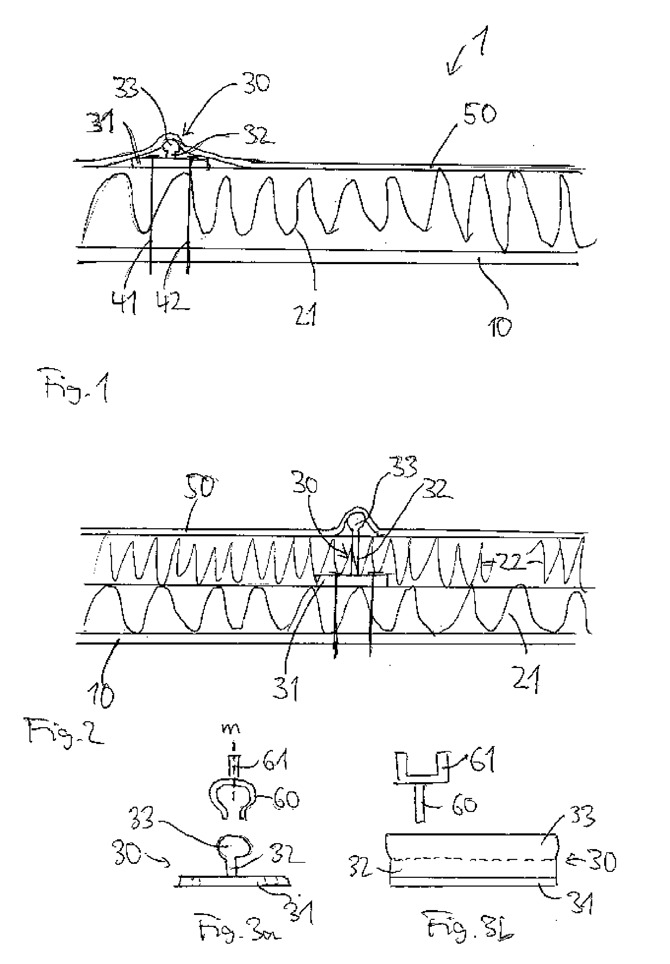

Die Figur 1 zeigt eine erfindungsgemäße Dachkonstruktion 1, in diesem Fall eine Flachdachkonstruktion, wie sie beispielsweise bei einem Neubau realisiert wird.

Die Dachkonstruktion 1 weist einen tragenden Unterboden 10 auf, beispielsweise ein Trapezdach. Oberhalb anschließend an den Unterboden 10 ist eine erste (thermische) Isolationsschicht 21 (Dämmschicht), beispielsweise bestehend aus Glas- oder Mineralwolleelementen, angeordnet. Auf der Isolationsschicht 21 liegt eine wasserdichte Dachfolie 50 auf, die die darunter liegenden Komponenten vor dem Eindringen von Feuchtigkeit und Wasser schützt.

Bei einem Neubau können jedoch unter der Dachfolie 50 bereits Tragvorrichtungen z.B. zum Anbringen von Solarzellen, Gerüsten, o.ä. vorgesehen werden, ohne dass die Dachfolie und somit die wasserführende Ebene verletzt/geöffnet werden muss.

Unterhalb der Dachfolie ist in diesem Ausführungsbeispiel ein Trägerelement 30 angeordnet, das mit einer Auflage 31, einer Halterung 33 und einem Verbindungsstück 32 zwischen der Auflage 31 und der Halterung 33 besteht. Die Auflage 31 liegt mit einer flächigen, nach unten gerichteten Auflagefläche auf der Isolationsschicht 21 auf. Außerdem ist die Auflage 31 über Befestigungsschrauben 41, 42 am Unterboden 10 befestigt. Somit können Zugkräfte über die Schrauben 41, 42 und Druckkräfte über die Auflagefläche weitergeleitet werden.

Die Halterung 33 ragt über die Oberseite der ersten Dämmschicht 21 hinaus und hebt so einen Bereich der Dachfolie 50 an. Somit ist die Lage der Trägerelemente 30 auf dem Flachdach stets erkennbar. Die Halterung 33 ist zum Anbringen weiterer Komponenten zugänglich.

Die Ausführungsform gemäß der Figur 2 unterscheidet sich darin, dass hier oberhalb der ersten Isolationsschicht 21 eine zweite Isolationsschicht 22 (Dämmschicht) angeordnet ist. Die erste und die zweite Isolationsschicht 21 bzw. 22 können aus unterschiedlichen Materialien bestehen.

Die Dachfolie 50 befindet sich oberhalb der zweiten Isolationsschicht 22 und liegt auf dieser auf. Die Auflage 31 des Trägerelements 30 liegt, wie in der ersten Ausführungsform, auf der ersten Isolationsschicht 21 auf. Allerdings ist sie zwischen den Isolationsschichten 21 und 22 angeordnet.

Die Auflage 31 und die Halterung 33 sind in etwa so ausgebildet wie in der ersten Ausführungsform, jedoch ist das Verbindungsstück 32 länger, da es den Bereich der zweiten Dämmschicht 22 durchgreift, so dass die Halterung 33 über die Oberseite der ersten Dämmschicht 21 hinausragt. Dabei hebt sie einen Bereich der Dachfolie 50 an.

Das Trägerelement 30 steht nur über die Befestigungsschrauben 41, 42 mit dem Unterboden 10 in Verbindung und ist damit von diesem weitgehend thermisch entkoppelt.

Die Figuren 3a und 3b zeigen ein Trägerelement 30 und ein Verbindungselement 60, 61, das zur formschlüssigen Befestigung des Verbindungselements 60, 61 an der Halterung 33 mit einem Klammerpaar 60 ausgestattet ist. Dieses kann elastisch aus Federstahl bestehen und so um die Halterung 33 herum gebogen werden. Das Verbindungselement 60, 61 kann jedoch auch zweiteilig ausgebildet sein, wobei die Teile an einer Trennfläche m miteinander verbunden werden können, sobald die Klammer 60 um die Halterung 33 gelegt ist.

Die Halterung 33 weist einen in etwa kreisförmigen Querschnitt mit im Bereich des Verbindungsstücks 32 vorgesehenen Hinterschneidungen auf. Der schmale Steg 32 (Verbindungselement) verbindet die Halterung 33 mit der Auflage 31, die eine flächige untere Auflagefläche aufweist. Die Auflage 31 liegt mit der flächigen, nach unten gerichteten Auflagefläche auf der ersten Isolationsschicht 21 auf. Außerdem ist die Auflage 31 über Befestigungsschrauben 41, 42 am Unterboden 10 befestigt. Hierzu sind in der Auflage 33 Bohrlöcher zur Aufnahme der Befestigungsschrauben 41, 42 ausgebildet.

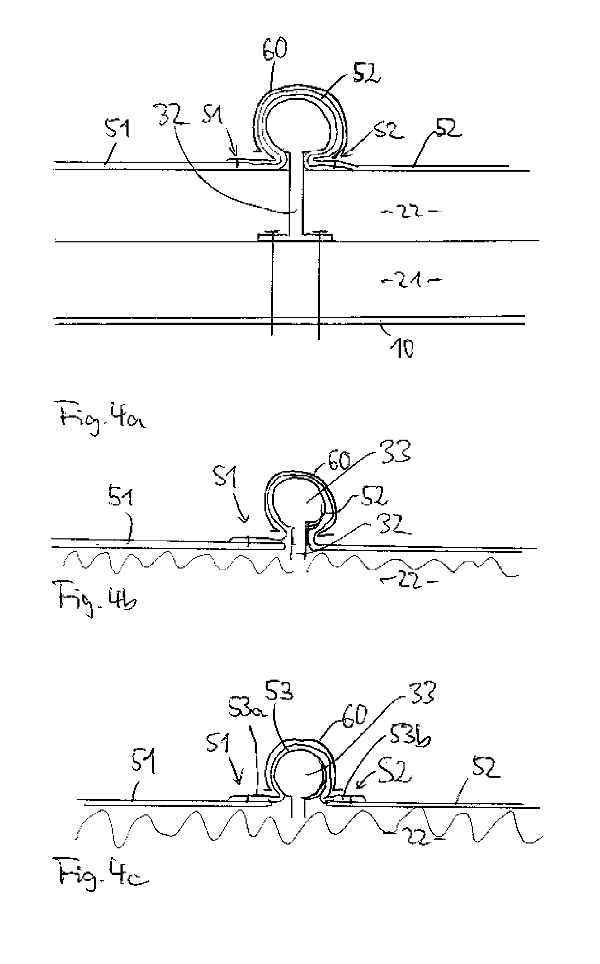

In der Figur 4a ist ein weiteres Ausführungsbeispiel der Erfindung dargestellt. Im Unterschied zu den bisherigen Ausführungsformen sind zwei Dachfolienabschnitte 51 (links) und 52 (rechts) bzw. deren Endabschnitte dargestellt, die sich in einem Bereich überlappen und über Schweißnähte S1 und S2 miteinander verschweißt sind.

In diesem Bereich ist ein Trägerelement angeordnet. Die über die Halterung 33 geführten Endabschnitte der Folien 51 und 52 werden mittels einer Klammer 60 zwischen Halterung 33 und Klammer 60 eingeklemmt. Somit wird ein Abheben der Folien 51 und 52 in diesem Bereich verhindert.

Die Figur 4b zeigt eine ähnliche Anordnung, wobei jedoch der linke Folienabschnitt 51 links des Verbindungsstücks 32 auf der Dämmschicht 22 aufliegt und auch links des Verbindungsstücks 32 des Trägerelements 30 endet. Alle nicht dargestellten Bereiche können beispielsweise wie in einer der vorhergehenden Figuren ausgebildet sein.

Der rechte Folienabschnitt 52 erstreckt sich von einem Bereich oberhalb des Endabschnitts des linken Folienabschnitts 51, auf dem er aufliegt und mit dem er durch eine erste Schweißnaht S1 oder durch einen entsprechenden Klebestreifen verbunden ist. Die Lage der sich überlappenden Abschnitte oberhalb bzw. unterhalb des jeweils anderen Abschnitts ist beliebig.

Der rechte Folienabschnitt 52 erstreckt sich über das Trägerelement 30 und liegt auf der rechten Seite des Verbindungsstücks 32 des Trägerelements 30 auf der Dämmung 22 auf. Oberhalb des über das Trägerelement 30 geführten Abschnitts der rechten Folie 52 ist ein Klemmprofil 60 angeordnet, das die Folie 52 an der Halterung 33 des Trägerelements 30 festhält.

Die Figur 4c zeigt eine weitere ähnliche Anordnung, wobei der linke Folienabschnitt 51 links des Verbindungsstücks 32 auf der Dämmschicht 22 aufliegt und auch links des Verbindungsstücks 32 des Trägerelements 30 endet. Der rechte Folienabschnitt 52 liegt rechts des Verbindungsstücks 32 auf der Dämmschicht 22 auf und endet rechts des Verbindungsstücks 32 des Trägerelements 30. Über das Trägerelement 30 ist ein mittlerer Folienabschnitt 53 geführt, der links und rechts auf dem linken Folienabschnitt 51 bzw. auf dem rechten Folienabschnitt 52 überlappend aufliegt und dort durch eine erste Schweißnaht S1 bzw. eine zweite Schweißnaht S2 (oder durch entsprechende Klebestreifen) mit dem linken Folienabschnitt 51 bzw. mit dem rechten Folienabschnitt 52 verbunden ist. Die Lage der sich überlappenden Abschnitte oberhalb bzw. unterhalb des jeweils anderen Abschnitts ist beliebig. Alle nicht dargestellten Bereiche können beispielsweise wie in einer der vorhergehenden Figuren ausgebildet sein.

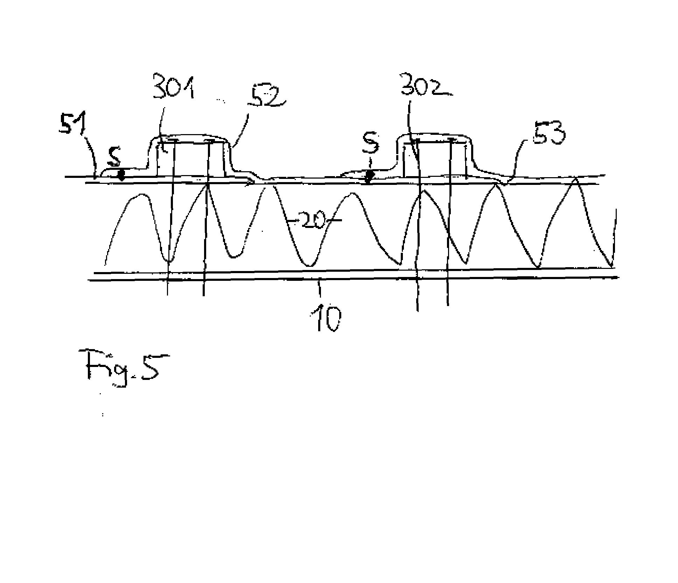

Im Ausführungsbeispiel gemäß der Figur 5 sind als Träger Bohlen oder Profile 301, 302 vorgesehen, die auf einem Flachdach angeordnet sind. Dabei sind Folien 51, 52, 53 auf einer Dämmschicht angeordnet. Die erste Bohle 301 liegt auf dem rechten Endabschnitt der ersten Folie 51 auf. Die zweite Folie ist links von der ersten Bohle 301 mit der zweiten, in diesem Bereich überlappenden Folie 52, über eine Schweißnaht S wasserdicht verschweißt. Die zweite Folie erstreckt sich rechts der ersten Bohle 301 bis unterhalb der zweiten Bohle 302. Die zweite Bohle 302 liegt also auf dem rechten Endabschnitt der zweiten Folie 52 auf. Links der zweiten Bohle 302 ist die zweite Folie mit dem Endbereich einer dritten Folie 53, die in diesem Bereich mit der zweiten Folie 52 überlappt, über eine weitere Schweißnaht S wasserdicht verschweißt. Die dritte Folie erstreckt sich über die zweite Bohle 302 und von der zweiten Bohle 302 nach rechts. Durch das Aufliegen der Bohle bzw. des Trägers auf einem Folienrandbereich (oder auch Folienmittelbereich) kann die Bohle gleichzeitig als mechanische Folienhalterung wirken. Damit kann auf andere Halterungen, z.B. Gewichtauflage, Aufbringen von Kies auf die Folienoberfläche, Halterungen, die von unten her wirken, o. ä. verzichtet werden.

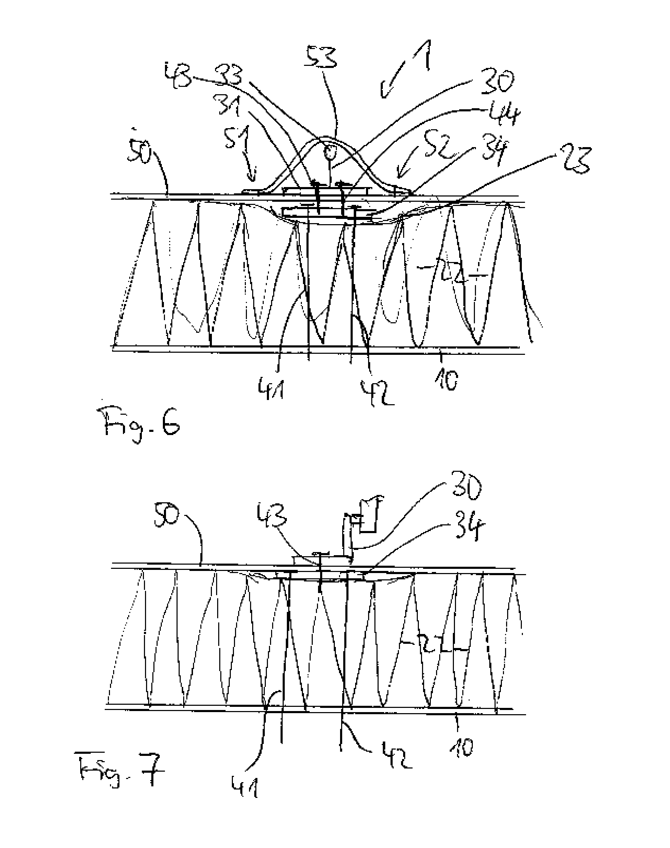

Die Figur 6 zeigt eine weitere Ausführungsform einer Dachmontagevorrichtung 1 gemäß der Erfindung. Sie umfasst einen Träger 30 wie oben beschrieben. Dieser Träger 30 liegt mit seiner Auflage 31 auf einer Dachfolie 50 auf und wird von einem Dachfolienabschnitt 53 überspannt, der seitlich beidseitig mit der Dachfolie vorschweißt ist (Schweißnähte S1, S2 oder entsprechende Klebestreifen).

Darüber hinaus ist in der Dachkonstruktion ein Unterträger 34 integriert. Dieser ist relativ flach ausgebildet und liegt so auf der Dämmung 22 auf, dass er in einer Mulde 23 derselben liegt, so dass die Oberfläche der Dachfolie 50 eben ist. Der Unterträger 34 selbst weist eine zur wasserführenden Ebene plane Oberfläche auf. Die Oberfläche des Unterträgers 34 ist bündig mit der Oberfläche der Dämmung 22 ausgerichtet, auf der die Dachfolie 50 aufliegt. Der Unterträger 34 ist genau unterhalb des Trägers 30 auf der gegenüberliegenden Seite der Dachfolie 50 angeordnet. Die beiden Träger sind beispielsweise durch Nieten oder andere Befestigungselemente miteinander verbunden. Der Unterträger 34 ist mittels weiterer Befestigungselemente 41, 42, z.B. mittels Befestigungsschrauben, mit dem Unterboden 10 verbunden.

In der Figur 7 ist eine weitere Ausführungsform einer Dachmontagevorrichtung 1, dargestellt. Anders als Ausführungsform nach Figur 6 ist der Unterträger 34 über eine Niete 43 mit dem Träger 30 verbunden. Die Niete ist mittels einer herkömmlichen Dichtung (nicht dargestellt) abgedichtet, so dass kein Wasser unter die Dachfolie 50 eindringen kann.

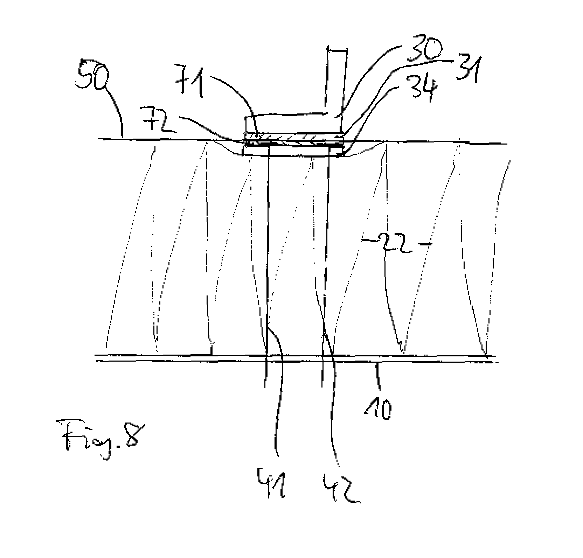

In der Ausführungsform gemäß der Figur 8 ist der Träger 30 bzw. dessen Auflage 31 mit der Oberseite der Dachfolie 50 über eine erste Klebeschicht 71 verklebt. An entsprechender Stelle an der entgegen gesetzten Seite der Dachfolie 50 ist der Unterträger 34 mittels einer zweiten Klebeschicht 72 mit der Dachfolie verklebt. Eine kraftschlüssige Verbindung zwischen den Trägern 30 und 34 kann (beispielsweise durch zusätzliche Nieten, die durch die Dachfolie ragen), muss jedoch nicht vorhanden sein. So kann das Eindringen von Wasser in die Dachkonstruktion sicher verhindert werden. Der Unterträger 34 ist wie bereits in den vorherigen Figuren beschrieben mit dem Dachunterboden 10 über Befestigungselemente/Schrauben 41, 42 kraftschlüssig verbunden.

Der Unterträger 34 ist in den Ausführungsformen gemäß den Figuren 7 und 8 wiederum so in der Dachkonstruktion integriert, dass die wasserführende Ebene bzw. Oberfläche der Dachfolie 50 eine plane Ebene darstellt.

## Patentansprüche

1. Dachkonstruktion (1), insbesondere Flachdachkonstruktion, umfassend:
einen Unterboden (10);
wenigstens eine erste Isolationsschicht (21), die oberhalb des Unterbodens (10) angeordnet ist; und
wenigstens eine Dachabdeckung (50), die oberhalb der ersten Isolationsschicht (21) angeordnet ist, zum wasserdichten Abdichten der darunter angeordneten Elemente;
**dadurch gekennzeichnet, dass**
die Dachkonstruktion (1) ein Trägerprofil (30) mit einer Auflage (31) und einem Halteabschnitt (33) aufweist, wobei das Trägerprofil (30) am Unterboden (10) befestigt ist, und der Halteabschnitt (33) unterhalb der Dachabdeckung (50) angeordnet ist.

2. Dachkonstruktion (1) gemäß dem Anspruch 1,
**dadurch gekennzeichnet, dass**
die Auflage (31) unterhalb der Dachabdeckung (50) und oberhalb der ersten Isolationsschicht (21) angeordnet ist.

3. Dachkonstruktion (1) gemäß dem Anspruch 1 oder 2,
**dadurch gekennzeichnet, dass**
die Dachkonstruktion (1) eine zweite Isolationsschicht (22) umfasst, die oberhalb der ersten Isolationsschicht (21) und unterhalb der Dachabdeckung (50) angeordnet ist.

4. Dachkonstruktion (1) gemäß dem Anspruch 3,
**dadurch gekennzeichnet, dass**
die Auflage (31) unterhalb der Dachabdeckung (50) und zwischen der ersten Isolationsschicht (21) und der zweiten Isolationsschicht (22) angeordnet ist.

5. Dachkonstruktion (1) gemäß einem der vorhergehenden Ansprüche,
**dadurch gekennzeichnet, dass**
die Auflage (31) und der Halteabschnitt (33) des Trägerprofils (30) über ein Verbindungsstück (32) miteinander verbunden sind.

6. Dachkonstruktion (1) gemäß einem der vorhergehenden Ansprüche,
**dadurch gekennzeichnet, dass**
der Halteabschnitt (33) des Trägerprofils (30) oberhalb der Auflage (31) des Trägerprofils (30) angeordnet ist, und der Halteabschnitt (33) einen Bereich der Dachabdeckung (50) gegenüber der Oberseite der ersten Isolationsschicht (21) bzw. der zweiten Isolationsschicht (22) anhebt.

7. Dachkonstruktion (1) gemäß einem der vorhergehenden Ansprüche,
**dadurch gekennzeichnet, dass**
das Trägerprofil (30) zur formschlüssigen Verbindung eines Verbindungselements (60, 61) mit der Halterung (33) ausgebildet ist.

8. Dachkonstruktion (1) gemäß einem der vorhergehenden Ansprüche,
**dadurch gekennzeichnet, dass**
die Dachkonstruktion (1) ein Verbindungselement (60, 61) umfasst, das formschlüssig mit der Halterung (33) des Trägerprofils (30) ausgebildet ist, und das die Dachabdeckung (50) zwischen der Halterung und dem Verbindungselement (60) hält.

9. Dachkonstruktion (1) gemäß Anspruch 8,
**dadurch gekennzeichnet, dass**
das Verbindungselement (60, 61) eine Klammer (60) zur Herstellung einer formschlüssigen Verbindung mit der Halterung (33) des Trägerprofils (30) aufweist.

10. Dachkonstruktion (1) gemäß Anspruch 8 oder 9,
**dadurch gekennzeichnet, dass**
das Verbindungselement (60, 61) einen Gleitschuh (61) zur Aufnahme einer Modulschiene aufweist, wobei die Modulschiene bewegbar im Gleitschuh (61) angeordnet ist.

11. Dachkonstruktion (1) gemäß einem der vorhergehenden Ansprüche,
**dadurch gekennzeichnet, dass**
die Auflage (31) des Trägerelements (30) mittels Verbindungselementen (41, 42) mit dem Unterboden (10) verbunden ist.

12. Dachkonstruktion (1) gemäß Anspruch 11,
**dadurch gekennzeichnet, dass**
die Auflage (31) des Trägerelements (30) thermisch entkoppelt bzw. thermisch schwach gekoppelt mit dem Unterboden (10) verbunden ist.

13. Dachkonstruktion (1) gemäß einem der vorhergehenden Ansprüche,
**dadurch gekennzeichnet, dass**
die Auflage (31) des Trägerelements (30) eine Auflagefläche zur Auflage auf der ersten Isolationsschicht (21) und zur flächigen Verteilung der Kräfte über den Auflagebereich der ersten Isolationsschicht (21) aufweist.

14. Dachkonstruktion (1) gemäß einem der vorhergehenden Ansprüche,
**dadurch gekennzeichnet, dass**
das Trägerelement (30) im Überlappungsbereich zweier Dachabdeckungen (51, 52) angeordnet ist.
